(19) Europäisches Patentamt / European Patent Office / Office européen des brevets

(11) **EP 4 371 837 A1**

(12) **DEMANDE DE BREVET EUROPEEN**

(43) Date de publication:
**22.05.2024 Bulletin 2024/21**

(21) Numéro de dépôt: **23209964.8**

(22) Date de dépôt: **15.11.2023**

(51) Classification Internationale des Brevets (IPC):
**B60W 30/188** (2012.01) **B60W 30/182** (2020.01)
**B60W 10/04** (2006.01) **B60W 40/10** (2012.01)
**B60W 40/107** (2012.01)

(52) Classification Coopérative des Brevets (CPC):
**B60W 30/188; B60W 10/04; B60W 30/182;**
B60W 2050/001; B60W 2050/0026;
B60W 2050/0052; B60W 2510/1005;
B60W 2520/10; B60W 2520/105; B60W 2540/10;
B60W 2540/215; B60W 2710/0666;
B60W 2720/106

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **17.11.2022 FR 2211982**

(71) Demandeur: **Renault s.a.s**
**92100 Boulogne Billancourt (FR)**

(72) Inventeur: **Rollet, Bernard**
**91510 Lardy (FR)**

(54) **PROCÉDÉ DE DÉTERMINATION D'UNE CONSIGNE DE COUPLE D'UN MOTEUR DE VÉHICULE AUTOMOBILE FONCTIONNANT SELON UN MODE ÉCONOMIQUE EN ÉNERGIE, AINSI QUE VÉHICULE**

(57) Ce procédé de détermination d'une consigne de couple d'un moteur (2) de véhicule automobile (1) fonctionnant selon un mode économique en énergie comprend des étapes de :
- détermination de l'accélération longitudinale courante du véhicule (1) ;
- détermination d'une valeur cible de l'accélération longitudinale maximale à ne pas dépasser ;
- détermination d'un écart d'accélération à partir de la différence entre la valeur de l'accélération longitudinale courante du véhicule (1) et la valeur cible de l'accélération maximale à ne pas dépasser ; et
- détermination d'une consigne de couple moteur en soustrayant un correctif de couple d'une valeur de couple moteur obtenue en fonction de l'enfoncement d'une pédale d'accélérateur (5) représentatif de la volonté du conducteur d'accélérer, le dit correctif de couple étant issu d'un régulateur de type proportionnel-intégral en fonction de l'écart d'accélération.

[Fig 1]

**Description**

**Domaine technique**

L'invention concerne un procédé de détermination de la consigne de couple d'un moteur équipant un véhicule automobile et vise d'une manière générale à réduire la consommation énergétique dudit moteur.

**Techniques antérieures**

Un grand nombre de véhicules comportent un mode de fonctionnement économique ou « mode économique » visant à réduire la consommation énergétique et qui peut être mis en oeuvre de manière volontaire par le conducteur du véhicule, par exemple en appuyant sur un bouton prévu à cet effet dans le véhicule.
Le conducteur d'un véhicule automobile dispose d'une pédale d'accélérateur qui sert, par un enfoncement plus ou moins marqué, à créer une consigne de couple moteur apte à entraîner le véhicule.
Dans l'état de la technique, un calculateur du moteur a en mémoire une cartographie qui se présente par exemple sous la forme d'une table, dont les entrées sont la valeur du régime moteur et l'enfoncement de la pédale, et dont la sortie est la consigne de couple associée audit régime et audit enfoncement. Le calculateur est ensuite apte à commander des actionneurs du moteur, de manière que le moteur délivre le couple prévu pour les valeurs correspondantes de régime et d'enfoncement de la pédale.
De manière la plus simple, le mode économique peut être mis en oeuvre en imposant une limitation du couple moteur maximal autorisé. Cependant, cette stratégie de limitation du couple non contextuelle en mode économique peut générer des désagréments de conduite et dans certains cas même aboutir à une impossibilité de monter de fortes côtes.
Le mode économique se traduit le plus souvent par une diminution de ce que l'on appelle la « progressivité de la pédale », par rapport à la « progressivité de la pédale » du mode nominal qui est mis en oeuvre par défaut. Par progressivité, on entend l'allure plus ou moins pentue d'une courbe qui représente la consigne de couple moteur en fonction de l'enfoncement de la pédale d'accélérateur, pour un régime donné du moteur.
Lorsque le conducteur du véhicule appuie sur la pédale d'accélérateur du véhicule, l'enfoncement de la pédale est interprété par le calculateur du moteur comme une volonté d'accélérer du conducteur. Selon le mode de conduite sélectionné, à savoir un mode nominal ou un mode économique, la courbe de progressivité sélectionnée est plus ou moins pentue ou raide, le mode économique sélectionnant celles avec la progressivité la plus basse. Ainsi, une augmentation de l'enfoncement de la pédale se traduit dans le mode économique par une plus faible augmentation de la demande de pourcentage de consigne de puissance que dans le mode nominal.
La progressivité de la pédale d'accélérateur du véhicule peut être calibrée en fonction d'une masse de référence du véhicule (qui peut correspondre, par exemple, à la masse à vide du véhicule à laquelle on ajoute un chargement prédéterminé, c'est-à-dire une masse prédéterminée, par exemple de bagages) et pour une route plate, donc en dehors des contraintes de roulage c'est-à-dire de la pente et du chargement réel du véhicule.
On connaît de l'état de la technique des procédés de contrôle de la consigne de couple d'un moteur de véhicule automobile qui visent à éviter au conducteur de devoir enfoncer davantage la pédale d'accélérateur pour augmenter le couple et garder une même accélération dans le cas où la masse du véhicule est plus grande qu'une la masse de référence donnée et/ou que le véhicule se déplace en montant une pente. Par exemple, le document FR-A1-30 75 735 de la demanderesse propose un procédé rendant l'accélération plus ou moins insensible à la charge, c'est-à-dire, à la masse ou au chargement du véhicule, et à la pente. Cependant, ce procédé nécessite la mise en oeuvre de mesures de masse et de pente ainsi que des calculs complexes pour déterminer une valeur de couple différentiel à appliquer au véhicule pour que l'accélération du véhicule reste identique à ce qu'elle est à sa masse de référence et sur le plat.
On connaît également des interfaces homme - machine incitatives, qui invitent le conducteur à limiter l'enfoncement de la pédale d'accélérateur du véhicule. Une telle interface peut se présenter sous la forme d'un voyant vertical à plusieurs niveaux, indiquant un score plus ou moins favorable de conduite et incitant le conducteur à relever le pied de la pédale d'accélérateur si elle est trop enfoncée. Cependant, il n'est pas très facile, ni très naturel pour le conducteur d'adopter un comportement compatible avec un score favorable de conduite, car cela supposerait qu'il sache doser très finement son appui sur la pédale d'accélérateur tout en tenant compte de la vitesse du véhicule. De plus, le conducteur doit reporter régulièrement son attention au suivi du voyant, ce qui peut augmenter les risques d'accident en cas d'événement soudain nécessitant une intervention rapide du conducteur.

**Exposé de l'invention**

L'invention propose de remédier de manière simple aux problèmes de l'art antérieur décrits précédemment.
Elle propose pour cela un procédé de détermination d'une consigne de couple d'un moteur de véhicule automobile fonctionnant selon un mode économique en énergie.

Le procédé comprend des étapes de :

- détermination de l'accélération longitudinale courante du véhicule ;
- détermination d'une valeur cible de l'accélération longitudinale maximale à ne pas dépasser ;
- détermination d'un écart d'accélération à partir de la différence entre la valeur de l'accélération longitudinale courante du véhicule et la valeur cible de l'accélération maximale à ne pas dépasser ; et
- détermination d'une consigne de couple moteur en soustrayant un correctif de couple d'une valeur de couple moteur obtenue en fonction de l'enfoncement d'une pédale d'accélérateur représentatif de la volonté du conducteur d'accélérer, le dit correctif de couple étant issu d'un régulateur de type proportionnel-intégral en fonction de l'écart d'accélération.

Le procédé proposé vise à faciliter l'utilisation du mode de fonctionnement économique, sans nécessiter de compétence particulière de la part du conducteur quant à l'utilisation de la pédale d'accélérateur. De plus, le mode de fonctionnement économique mis en oeuvre par l'invention s'adapte automatiquement aux conditions de circulation sans nécessiter de moyens de calcul importants.

Par exemple, l'accélération longitudinale courante du véhicule est obtenue en mesurant et en dérivant par rapport au temps la vitesse instantanée du véhicule.

Par exemple, l'accélération longitudinale courante du véhicule est mesurée par un capteur d'accélération qui équipe un calculateur de freinage et de stabilité du véhicule de type électro-stabilisateur programmé.

Avantageusement, l'étape de détermination de l'accélération longitudinale courante du véhicule comprend une étape de filtrage des valeurs d'accélération.

Selon une caractéristique, la valeur cible de l'accélération longitudinale maximale à ne pas dépasser est calculée selon une fonction dépendant seulement de la vitesse du véhicule.

Selon une autre caractéristique, la valeur cible de l'accélération longitudinale maximale à ne pas dépasser est calculée selon une cartographie prédéterminée dépendant de la vitesse du véhicule et de l'enfoncement de la pédale d'accélérateur.

Selon une autre caractéristique, la valeur cible de l'accélération longitudinale maximale à ne pas dépasser est calculée en multipliant un pourcentage d'accélération maximale issu d'une cartographie prédéterminée dépendant de la vitesse du véhicule et de l'enfoncement de la pédale d'accélérateur, par une valeur tabulaire prédéterminée de l'accélération maximale dépendant de la vitesse instantanée mesurée du véhicule.

Selon une autre caractéristique, la valeur cible de l'accélération longitudinale maximale à ne pas dépasser est calculée en multipliant un pourcentage d'accélération maximale issu d'une cartographie prédéterminée dépendant du rapport de boîte de vitesse engagé du véhicule, par une valeur tabulaire prédéterminée de l'accélération maximale dépendant de la vitesse instantanée mesurée du véhicule.

Avantageusement, le procédé comprend une étape de désactivation du mode économique.

Selon un autre aspect, l'invention a pour objet un véhicule automobile comprenant au moins un moteur fonctionnant selon un mode économique en énergie, ledit véhicule mettant en oeuvre un procédé tel que décrit ci-dessus.

**Brève description des dessins**

D'autres buts, caractéristiques et avantages de l'invention apparaîtront à la lecture de la description suivante, donnée uniquement à titre d'exemple non limitatif, et faite en référence aux dessins annexés sur lesquels :

[Fig 1] est une vue schématique illustrant un véhicule équipé d'un moteur et d'une pédale d'accélérateur, pour la mise en oeuvre du procédé selon l'invention ;
[Fig 2] illustre les forces résistantes appliquées au véhicule de la figure 1;
[Fig 3] est un schéma de principe qui illustre les étapes du procédé selon l'invention ;
[Fig 4] illustre la limitation de l'accélération en fonction de la vitesse selon un mode de mise en oeuvre de l'invention ; et
[Fig 5] illustre la limitation de l'accélération en fonction de la vitesse et de l'enfoncement de la pédale d'accélérateur selon un autre mode de mise en oeuvre de l'invention ;

**Exposé détaillé d'au moins un mode de réalisation**

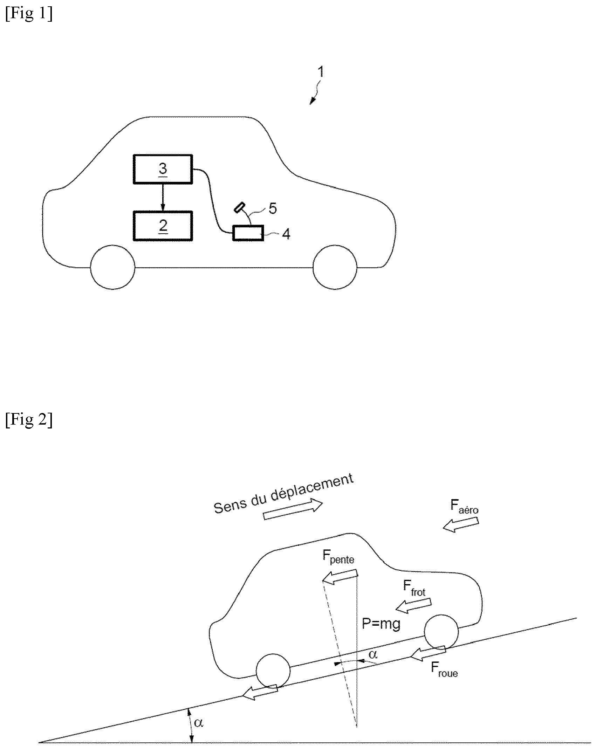

La figure 1 illustre un véhicule automobile 1 comprenant un moteur 2 et un dispositif de contrôle 3 du moteur 2, par exemple un calculateur. Le moteur 2 est par exemple un moteur à combustion interne du type allumage commandé, fonctionnant notamment à l'essence. Le moteur 2 peut être associé à au moins une machine électrique fonctionnant en mode moteur, dans un dispositif de motorisation hybride par exemple. Plus généralement, le moteur 2 peut prendre la forme notamment d'un dispositif de motorisation thermique, électrique ou hybride, l'application de l'invention n'étant pas restrictive par rapport au système de propulsion utilisé.

Dans l'exemple illustré, le dispositif de contrôle 3 est en communication avec un capteur 4 de position d'une pédale d'accélérateur 5.

Lorsqu'un conducteur (non représenté) du véhicule appuie sur la pédale d'accélérateur 5, la position de la pédale est mesurée par le capteur 4, et une valeur de la position est transmise au dispositif de contrôle. Ce dernier détermine, à partir d'un ensemble de paramètres comprenant au moins la valeur de position reçue et une valeur courante du régime du moteur, une valeur de consigne de couple Csp du moteur. Le dispositif de contrôle élabore en outre, à partir de la valeur de consigne de couple, une valeur de commande du moteur, par exemple une valeur de durée d'injection de carburant, ou autre.

Le couple moteur Cmot qui est ensuite obtenu effectivement par le réglage des actionneurs du moteur suivant la consigne Csp imposée par le calculateur est transmis aux roues motrices du véhicule, par l'intermédiaire d'un système de transmission (non représenté) comprenant une boîte de vitesses et un pont différentiel.

Plus précisément la puissance Pmot du moteur suit l'équation :

$$P_{mot} = C_{mot} \times \omega_{mot} \qquad (Eq.1)$$

Avec $\omega_{mot}$ la vitesse angulaire de rotation du moteur, exprimée en rad/s.

La puissance transmise aux roues suit l'équation :

$$P_{roue} = C_{roue} \times \omega_{roue} = r \times P_{mot} \qquad (Eq.2)$$

Avec

$C_{roue}$: le couple aux roues, exprimé en Nm ;
$\omega_{roue}$: la vitesse angulaire de rotation des roues, exprimée en rad/s ;
r : le rendement de la chaîne de transmission (sans unité).

Le couple aux roues suit alors l'équation :

$$C_{roue} = \frac{P_{roue}}{\omega_{roue}} = r \times \frac{P_{mot}}{\omega_{roue}} = r \times C_{mot} \times \left(\frac{\omega_{mot}}{\omega_{roue}}\right) \qquad (Eq.3)$$

Il suit encore l'équation :

$$C_{roue} = (r/K) \times C_{mot} \qquad (Eq.4)$$

Avec K le rapport de démultiplication ou rapport de réduction, de la chaîne de transmission, qui est une constante mécanique, exprimée sans unité, dépendant du rapport de boîte engagé.

On en déduit que la force d'entraînement du véhicule, ou force motrice Fmotrice suit l'équation :

$$F_{motrice} = (r/(K \times R_{roue})) \times C_{mot} \qquad (Eq.5)$$

Avec $R_{roue}$ le rayon des roues du véhicule, exprimé en m.

Selon le principe fondamental de la dynamique, la force totale est liée à l'accélération du véhicule par l'équation :

$$m \times a = F_{motrice} - F_{résistante} \qquad (Eq.6)$$

Avec

m : la masse du véhicule, exprimée en kg ;
a : l'accélération du véhicule, exprimée en m/s$^2$ ;
$F_{résiscance}$ : les forces résistantes appliquées au véhicule, exprimées en N.

En référence à la figure 2, qui représente un véhicule sur une route présentant une pente montante d'angle $\alpha$, exprimé par exemple en degrés, les forces résistantes qui s'appliquent au véhicule comportent la force aérodynamique $F_{aéro}$, la force de résistance au roulement $F_{roul}$, la force de gravité $F_{pente}$, et d'autres forces résistantes $F_{frot}$.

La force aérodynamique $F_{aéro}$ ou traînée est donnée par l'équation :

$$F_{aéro} = {^1\!/_2} \times \rho \times V^2 \times S \times C_x \qquad (Eq.7)$$

Où $\rho$ désigne la masse volumique de l'air, V la vitesse du véhicule, S la surface frontale du véhicule et $C_x$ le coefficient de la traînée.

La force de résistance au roulement $F_{roul}$ est donnée par l'équation :

$$F_{roul} = C_{RR} \times P \qquad (Eq.8)$$

Où $C_{RR}$ désigne le coefficient de résistance des pneus exprimé en kg/kg, ou usuellement en kg/t, donnée prédéterminée par des essais du fabricant, et P désigne le poids du véhicule que supporte le pneu.

La force de résistance au roulement suit donc aussi l'équation :

$$F_{roul} = C_{RR} \times m \times g \qquad (Eq.9)$$

Avec m la masse du véhicule en kg (ou en tonne si le coefficient de résistance des pneus est exprimé en kg/t), et g l'accélération de la pesanteur égale à 9,81 m/s$^2$.

La force de gravité $F_{pente}$ est une force résistante seulement si le véhicule se déplace dans le sens de la montée sur une route en pente. Cette force suit l'équation :

$$F_{pente} = m \times g \times \sin(\alpha) \qquad (Eq.10)$$

Dans le cas d'une route plate, c'est-à-dire ne présentant pas d'inclinaison, la force de gravité est nulle.

Les autres forces résistantes $F_{frot}$ ont principalement pour origine les frottements internes au véhicule et notamment au moteur.

Le principe fondamental de la dynamique peut se réécrire sous la forme de l'équation suivante :

$$m \times a = (r/(K \times R_{roue})) \times C_{mot} - F_{aéro} - F_{roul} - F_{pente} - F_{frot} \qquad (Eq.11)$$

A la différence des procédés de l'état de l'art qui limitent le couple fourni aux roues, le procédé de l'invention propose de mettre en place une limitation de l'accélération du véhicule en fonction de la vitesse courante du véhicule, c'est-à-dire la vitesse instantanée du véhicule.

En effet, une limitation de l'accélération permet de s'affranchir de manière simple de la valeur particulière des efforts résistifs que ce soit par rapport au chargement du véhicule, à son aérodynamique ou à la pente sur laquelle il évolue. De plus, en délimitant le domaine d'utilisation du véhicule en accélération en fonction de la vitesse, le procédé garantit de ne jamais dépasser un niveau de consommation d'énergie jugé non économe.

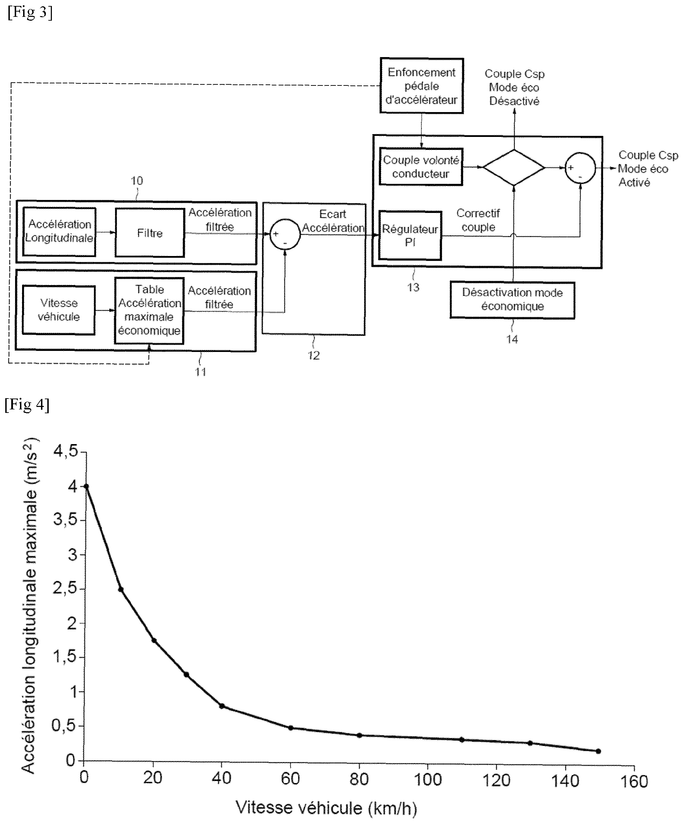

On va maintenant décrire en référence aux figures 3 à 5 un procédé de détermination d'une consigne de couple d'un moteur de véhicule automobile selon l'invention.

La figure 3 illustre un schéma de principe du procédé selon l'invention, utilisant un véhicule automobile 1 tel que décrit précédemment. Le procédé est notamment mis en oeuvre par un calculateur 3 du moteur 2 ou du véhicule 1.

Le procédé est mis en oeuvre lorsque le conducteur active le mode de conduite économique ou mode économique, par exemple en activant un bouton présent sur le tableau de bord du véhicule.

Le procédé commence par une étape 10 de détermination de l'accélération longitudinale courante du véhicule. Par exemple, l'accélération longitudinale courante peut être obtenue en mesurant et en dérivant par rapport au temps la vitesse instantanée du véhicule. Par exemple, l'accélération longitudinale courante peut être mesurée par un capteur d'accélération qui équipe un calculateur de freinage et de stabilité du véhicule de type électro-stabilisateur programmé ou ESP.

L'étape 10 de détermination de l'accélération longitudinale courante comprend avantageusement une étape de filtrage des valeurs d'accélération afin de diminuer les oscillations des valeurs d'accélération longitudinale courante dans la suite du procédé.

Le procédé comprend également une étape 11 de détermination d'une valeur cible de l'accélération longitudinale maximale à ne pas dépasser en mode économique.

Dans tous les cas, l'étape 11 comprend une étape de mesure de la vitesse instantanée du véhicule.

La valeur cible de l'accélération maximale à ne pas dépasser en mode économique peut par exemple être calculée par le calculateur 3 selon une fonction prédéterminée et contenue dans sa mémoire, en fonction de la vitesse instantanée mesurée du véhicule, ladite fonction dépendant seulement de la vitesse du véhicule tel qu'illustré sur la figure 4.

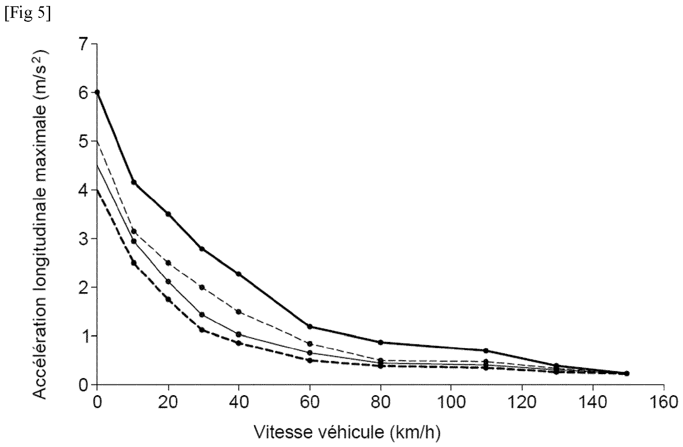

Alternativement, la valeur cible de l'accélération maximale à ne pas dépasser en mode économique peut par exemple être calculée par le calculateur 3 à partir d'une cartographie (figure 5) prédéterminée et contenue dans sa mémoire, en fonction de la vitesse instantanée mesurée du véhicule et de l'enfoncement de la pédale d'accélérateur.

Dans une variante, la valeur cible de l'accélération longitudinale maximale à ne pas dépasser en mode économique est déterminée par le calculateur 3 à partir d'une cartographie prédéterminée et contenue dans sa mémoire d'un pourcentage d'accélération maximale en mode économique dépendant de la vitesse du véhicule et de l'enfoncement de la pédale d'accélérateur. Le pourcentage issu de la cartographie est multiplié par une valeur de l'accélération maximale dépendant de la vitesse instantanée mesurée du véhicule, issue d'une table prédéterminée et contenue dans la mémoire du calculateur 3.

Dans une autre variante, la valeur cible de l'accélération longitudinale maximale à ne pas dépasser en mode économique est déterminée par le calculateur 3 à partir d'une cartographie prédéterminée et contenue dans sa mémoire d'un pourcentage d'accélération maximale en mode économique dépendant du rapport de boîte de vitesse engagé. Le pourcentage issu de la cartographie est multiplié par une valeur de l'accélération maximale dépendant de la vitesse instantanée mesurée du véhicule, issue d'une table prédéterminée et contenue dans la mémoire du calculateur 3.

Lors de l'étape 12 de détermination d'un écart d'accélération suivante, le calculateur 3 calcule l'écart entre la valeur de l'accélération longitudinale courante du véhicule et la valeur cible de l'accélération maximale à ne pas dépasser en mode économique.

Le procédé se poursuit par une étape 13 de détermination d'une consigne de couple moteur en mode économique. Dans cette étape, un régulateur de type proportionnel-intégral fournit un correctif de couple moteur en fonction de l'écart d'accélération obtenu à l'étape 12. La consigne de couple moteur en mode économique est obtenue en soustrayant le correctif de couple issu du régulateur de la valeur du couple moteur calculée par le calculateur 3 en fonction de l'enfoncement d'une pédale d'accélérateur représentatif de la volonté du conducteur d'accélérer.

Il est envisageable que les valeurs des corrections proportionnelle et intégrale intervenant dans le régulateur proportionnel-intégral puissent dépendre du rapport de boîte de vitesse engagé et/ou de la vitesse du véhicule.

Le procédé peut être désactivé (étape 14) dans certains cas, par exemple lorsque le conducteur désactive volontairement le mode de conduite économique, par exemple en désactivant un bouton présent sur le tableau de bord du véhicule. Le procédé peut être désactivé par défaut sur certains rapports de la boîte de vitesses, par exemple pour le premier rapport afin de faciliter l'évolution à basse vitesse.

De manière classique, une fonction de rétrogradation forcée, dite « kick-down » en vocable anglo-saxon est utilisée lorsqu'une accélération maximale est nécessaire, lors d'un dépassement par exemple. Une telle rétrogradation est déclenchée par une action volontaire du conducteur sur la pédale d'accélérateur qu'il enfonce à fond pour obtenir une forte accélération de son véhicule, interprétée par le calculateur du véhicule comme une demande de puissance maximale. Lorsque la pédale d'accélérateur est munie d'un dispositif kick-down physique, le procédé de l'invention peut être désactivé lorsque le conducteur appuie sur la pédale d'accélérateur de manière que l'enfoncement de la pédale après un point dur active la fonction kick-down permettant ainsi de libérer la limite d'accélération.

Il est possible de calibrer toute cartographie utilisée pour déterminer la valeur cible de l'accélération maximale à ne pas dépasser en mode économique de manière à autoriser des valeurs élevées d'accélération pour les derniers pourcentages d'enfoncement de la pédale d'accélérateur, et obtenir ainsi une fonction kick-down numérique, sans qu'il ne soit nécessaire de recourir à un dispositif kick-down physique.

Lorsque le mode économique est désactivé, le mode de fonctionnement du moteur 2 passe à un mode de fonctionnement nominal et la consigne de couple moteur est déterminée en fonction de l'enfoncement de la pédale d'accélérateur représentatif de la volonté du conducteur d'accélérer et sans tenir compte du correctif de couple visant à limiter l'accélération maximale longitudinale.

## Revendications

1. Procédé de détermination d'une consigne de couple (Csp) d'un moteur (2) de véhicule automobile (1) fonctionnant selon un mode économique en énergie, **caractérisé en ce que** ledit procédé comprend des étapes de :

- détermination de l'accélération longitudinale courante du véhicule (1) ;
- détermination d'une valeur cible de l'accélération longitudinale maximale à ne pas dépasser ;
- détermination d'un écart d'accélération à partir de la différence entre la valeur de l'accélération longitudinale courante du véhicule (1) et la valeur cible de l'accélération maximale à ne pas dépasser ; et
- détermination d'une consigne de couple moteur en soustrayant un correctif de couple d'une valeur de couple moteur obtenue en fonction de l'enfoncement d'une pédale d'accélérateur (5) représentatif de la volonté du conducteur d'accélérer, le dit correctif de couple étant issu d'un régulateur de type proportionnel-intégral en fonction de l'écart d'accélération.

2. Procédé selon la revendication 1, dans lequel l'accélération longitudinale courante du véhicule (1) est obtenue en mesurant et en dérivant par rapport au temps la vitesse instantanée du véhicule (1).

3. Procédé selon la revendication 1, dans lequel l'accélération longitudinale courante du véhicule (1) est mesurée par un capteur d'accélération qui équipe un calculateur de freinage et de stabilité du véhicule (1) de type électro-stabilisateur programmé.

4. Procédé selon l'une quelconque des revendications précédentes, dans lequel l'étape de détermination de l'accélération longitudinale courante du véhicule (1) comprend une étape de filtrage des valeurs d'accélération.

5. Procédé selon l'une quelconque des revendications précédentes, dans lequel la valeur cible de l'accélération longitudinale maximale à ne pas dépasser est calculée selon une fonction dépendant seulement de la vitesse du véhicule (1).

6. Procédé selon l'une quelconque des revendications 1 à 4, dans lequel la valeur cible de l'accélération longitudinale maximale à ne pas dépasser est calculée selon une cartographie prédéterminée dépendant de la vitesse du véhicule (1) et de l'enfoncement de la pédale d'accélérateur (5).

7. Procédé selon l'une quelconque des revendications 1 à 4, dans lequel la valeur cible de l'accélération longitudinale maximale à ne pas dépasser est calculée en multipliant un pourcentage d'accélération maximale issu d'une cartographie prédéterminée dépendant de la vitesse du véhicule (1) et de l'enfoncement de la pédale d'accélérateur (5), par une valeur tabulaire prédéterminée de l'accélération maximale dépendant de la vitesse instantanée mesurée du véhicule (1).

8. Procédé selon l'une quelconque des revendications 1 à 4, dans lequel la valeur cible de l'accélération longitudinale maximale à ne pas dépasser est calculée en multipliant un pourcentage d'accélération maximale issu d'une cartographie prédéterminée dépendant du rapport de boîte de vitesse engagé du véhicule (1), par une valeur tabulaire prédéterminée de l'accélération maximale dépendant de la vitesse instantanée mesurée du véhicule (1).

9. Procédé selon l'une quelconque des revendications précédentes, comprenant une étape de désactivation du mode économique.

10. Véhicule automobile (1) comprenant au moins un moteur fonctionnant selon un mode économique en énergie, ledit véhicule (1) mettant en oeuvre un procédé selon l'une quelconque des revendications 1 à 9.

[Fig 1]

[Fig 2]

[Fig 3]

[Fig 4]

[Fig 5]

Europäisches
Patentamt

European
Patent Office

Office européen
des brevets

**RAPPORT DE RECHERCHE EUROPEENNE**

Numéro de la demande

**EP 23 20 9964**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | DE 10 2018 204375 A1 (BAYERISCHE MOTOREN WERKE AG [DE]) 26 septembre 2019 (2019-09-26) | 1-6,9,10 | INV. B60W30/188 B60W30/182 |
| A | * alinéa [0006] - alinéa [0013] * * alinéa [0023] - alinéa [0027]; figures 1,2 * | 7,8 | B60W10/04 B60W40/10 B60W40/107 |
| | ----- | | |
| X | DE 10 2019 218498 A1 (ZAHNRADFABRIK FRIEDRICHSHAFEN [DE]) 2 juin 2021 (2021-06-02) | 1-6,9,10 | |
| A | * alinéa [0009] - alinéa [0024]; figure 1 * | 7,8 | |
| | ----- | | |
| A | FR 2 828 444 A1 (VOLKSWAGEN AG [DE]) 14 février 2003 (2003-02-14) * page 1, ligne 1 - ligne 18; figure 3 * * le document en entier * | 1-10 | |
| | ----- | | |
| A | EP 3 121 423 A1 (TOYOTA MOTOR CO LTD [JP]) 25 janvier 2017 (2017-01-25) * alinéa [0017] - alinéa [0026]; figure 1 * * alinéa [0032] - alinéa [0036]; figure 3 * * alinéa [0066] - alinéa [0073] * | 1-10 | **DOMAINES TECHNIQUES RECHERCHES (IPC)** B60W |
| | ----- | | |
| A | US 2020/122723 A1 (KANNO YOSHIHITO [JP]) 23 avril 2020 (2020-04-23) * alinéa [0053] - alinéa [0066]; figures 7-10 * | 1-10 | |
| | ----- | | |

Le présent rapport a été établi pour toutes les revendications

| Lieu de la recherche | Date d'achèvement de la recherche | Examinateur |
|---|---|---|
| Munich | 4 avril 2024 | Engelhardt, Helmut |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 23 20 9964

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-04-2024

| Document brevet cité au rapport de recherche | Date de publication | Membre(s) de la famille de brevet(s) | Date de publication |
|---|---|---|---|
| DE 102018204375 A1 | 26-09-2019 | AUCUN | |
| DE 102019218498 A1 | 02-06-2021 | AUCUN | |
| FR 2828444 A1 | 14-02-2003 | DE 10138620 A1 | 06-03-2003 |
| | | FR 2828444 A1 | 14-02-2003 |
| EP 3121423 A1 | 25-01-2017 | CN 106364476 A | 01-02-2017 |
| | | EP 3121423 A1 | 25-01-2017 |
| | | JP 6347233 B2 | 27-06-2018 |
| | | JP 2017024553 A | 02-02-2017 |
| | | KR 20170012062 A | 02-02-2017 |
| | | US 2017021832 A1 | 26-01-2017 |
| US 2020122723 A1 | 23-04-2020 | CN 111086517 A | 01-05-2020 |
| | | DE 102019128560 A1 | 23-04-2020 |
| | | JP 7070325 B2 | 18-05-2022 |
| | | JP 2020066297 A | 30-04-2020 |
| | | US 2020122723 A1 | 23-04-2020 |

EPO FORM P0460

Pour tout renseignement concernant cette annexe : voir Journal Officiel de l'Office européen des brevets, No.12/82

**EP 4 371 837 A1**

**Documents brevets cités dans la description**

- FR 3075735 A1